# EUROPEAN PATENT SPECIFICATION

(11) **EP 4 156 489 B1**
(45) Date of publication and mention of the grant of the patent: **01.10.2025**
(21) Application number: 21808131.3
(22) Date of filing: 22.03.2021
(51) Int. Cl.: H02M 5/458, H02M 7/493, H02M 1/00, F03D 80/80, H02J 3/38

(54) **ANTI-DRAGGING SYSTEM AND WIND TURBINE GENERATOR SYSTEM**
ANTI-DRAGGING-SYSTEM UND WINDTURBINENGENERATORSYSTEM
SYSTÈME ANTI-GLISSEMENT ET SYSTÈME GÉNÉRATEUR D'ÉOLIENNE

(30) Priority: 20.05.2020 CN 202010432841
(43) Date of publication of application: 29.03.2023
(73) Proprietor: Zhejiang University, Hangzhou, Zhejiang 310058 (CN); Shanghai Electric Wind Power Group Co., Ltd., Shanghai 200241 (CN)
(72) Inventor: LIU, Jiaming, Shanghai 200241 (CN); WU, Lijian, Hangzhou, Zhejiang 310058 (CN); YANG, Shuai, Shanghai 200241 (CN); WANG, Haiyang, Shanghai 200241 (CN); MIAO, Jun, Shanghai 200241 (CN); JIN, Xiaolong, Shanghai 200241 (CN)
(74) Representative: Dai, Simin
(86) International application number: PCT/CN2021/082052
(87) International publication number: WO 2021/232927

(56) References cited:
- EP-A1- 2 677 168
- EP-A1- 3 561 984
- EP-A1- 3 617 498
- CN-A- 107 658 903
- CN-A- 111 669 061
- CN-U- 204 992 616
- CN-U- 207 500 059
- US-A1- 2010 292 852
- US-B1- 6 411 067

## Description

### TECHNICAL FIELD

The present disclosure related to technical fields of converters, in particular to reversing systems and wind turbines.

### BACKGROUND

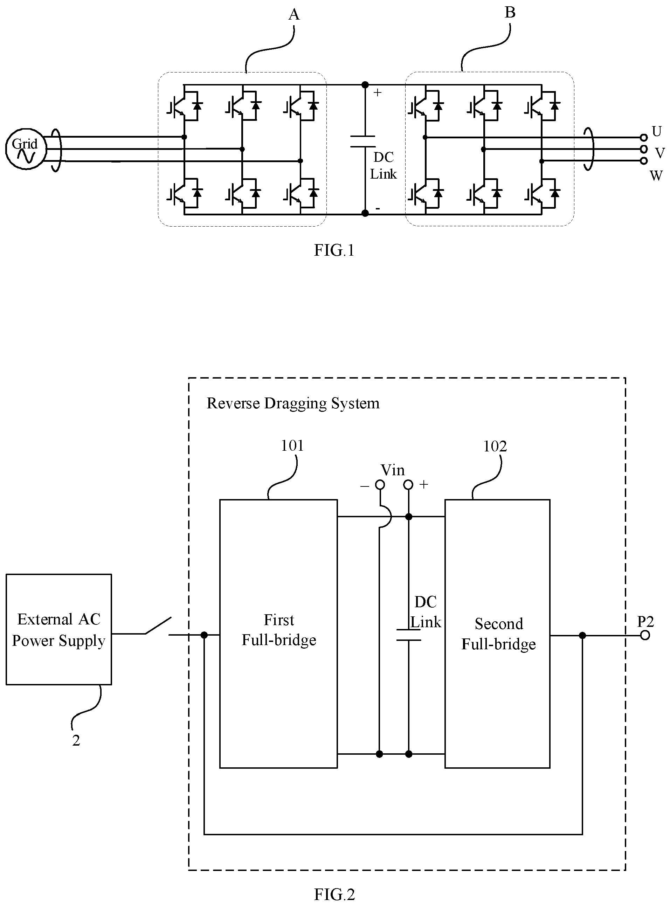

A traditional back-to-back two-way converter is shown in FIG.1. The two-way converter is composed of a full-bridge A, a full-bridge B, and a DC link. The full-bridge A and the full-bridge B are set back-to-back and have same components. An input terminal of the full-bridge A is electrically connected to a power grid (Grid), and the three-phase output terminals U, V and W of the full-bridge B are electrically connected to a three-phase motor. When the two-way converter performs a reversing function, for example, in a case that the three-phase motor is to run with a low speed and a super torque, a current on an inverter of the two-way converter may exceed its output capacity, but a current on a rectifier side may be much smaller than its output capacity. At this time, the current of the inverter could not match the current of the rectifier side, and the load-carrying capacity may be lowered. Additional equipment is to be added to perform the reversing function, which increases a cost. D1 (Publication No. EP2677168A1) discloses a matrix converter apparatus for wind-power generation, including a matrix converter and a controller, where the matrix converter is controlled by the controller so as to fully convert electric power generated in a generator by rotating force of a wind turbine rotated by wind power to be supplied to a power grid. D2 (Publication No. EP3617498A1) discloses a system for rotating an unbalanced direct drive wind turbine, where the system comprises an auxiliary converter and a power source coupled to the auxiliary converter, and the auxiliary converter is configured to supply a current to the wind turbine generator for generating a torque to rotate the hub. D3 (Publication No. US20100292852A1) discloses a wind mill apparatus for generating electric power to a grid point of an electric network. The apparatus includes a wind rotor, an electric generator operatively connected to the wind rotor, and an electric multiphase ac link operatively connecting the generator to the grid point. The ac link includes a first current path including a switchgear, a second current path including a dc link including a first converter operatively connected to the generator, a second converter operatively connected to the grid point, and a capacitor operatively connected between the conductors of the dc link. The ac link further includes a connectable multiphase dump load for blocking during a fault condition on the network the reactive power flow in the ac link, yet providing a reduced transfer of active power.

### SUMMARY

The technical problem to be solved by the present disclosure is to alleviate a defect of weak load-carrying capacity of a converter in related arts, such that reversing systems and wind turbines are provided.

The present disclosure solves the above technical problem through the following technical solutions.

The invention is set out by the appended claims. Embodiments listed hereinafter which do not fall within the wording of the claims are given only as useful examples for understanding the invention.

The present disclosure provides a wind turbine comprising a reversing system according to independent apparatus claim 1. Preferred embodiments are described by the dependent claims.

The reversing system including the converter provided by the present disclosure has a relatively strong load-carrying capacity and can provide a relatively stable output performance. Particularly, when the reversing system is applied in a field of wind power generation, it can effectively improve the load-carrying capacity of the converter of the wind turbine when performing a reversing function, and thus use of additional equipment is reduced and a construction cost is reduced.

### BRIEF DESCRIPTION OF THE DRAWINGS

FIG.1 is a schematic structural diagram illustrating a back-to-back two-way converter in related arts.
FIG.2 is a schematic structural diagram illustrating a reversing system according to embodiment 1 of the present disclosure.
FIG.3 is a schematic structural diagram illustrating a reversing system according to embodiment 2 of the present disclosure.
FIG.4 is a schematic structural diagram illustrating a reversing system according to embodiment 3 of the present disclosure.
FIG.5 is a schematic diagram illustrating an equivalent circuit of the reversing system according to embodiment 3 of the present invention.
FIG.6 is a schematic structural diagram illustrating a reversing system according to embodiment 4 of the present disclosure.
FIG.7 is a schematic structural diagram illustrating a wind turbine according to embodiment 5 of the present disclosure.
FIG.8 is a schematic structural diagram illustrating a wind turbine according to embodiment 6 of the present disclosure.

### DETAILED DESCRIPTION

The present disclosure is further described below by way of embodiments, but the present disclosure is not limited to the scope of the embodiments.

### Embodiment 1

This embodiment provides a reversing system, which includes a converter. Referring to FIG.2, the converter includes a first full-bridge 101, a second full-bridge 102, and a DC Link. The first full-bridge 101 and the second full-bridge 102 are electrically connected back-to-back through the DC Link, that is, a DC port of the first full-bridge 101 is electrically connected to a DC port of the second full-bridge 102. An AC port of the first full-bridge 101 is disconnected from an external AC power supply 2; the AC port of the first full-bridge 101 is electrically connected to an AC port of the second full-bridge 102; the DC Link is for electrical connection with an external DC power supply Vin; The AC port of the second full-bridge 102 functions as an output terminal P2 of the reversing system.

When the AC port of the first full-bridge 101 is electrically connected to the external AC power supply 2, the AC port of the first full-bridge 101 is disconnected from the AC port of the second full-bridge 102, and the AC port of the second full-bridge 102 is electrically connected to a motor, the converter can transfer energy between the external AC power supply 2 and the motor. When the AC port of the first full-bridge 101 is disconnected from the external AC power supply 2, and the AC port of the first full-bridge 101 is electrically connected to the AC port of the second full-bridge 102, the converter can function as an inverter by forming a folded-in-half reversing structure, and an output current of the AC port of the second full-bridge will be doubled, and load-carrying capacity is also enhanced.

In an optional implementation, the external AC power supply is a power grid (Grid), and the output terminal of the reversing system is for connecting to the motor.

### Embodiment 2

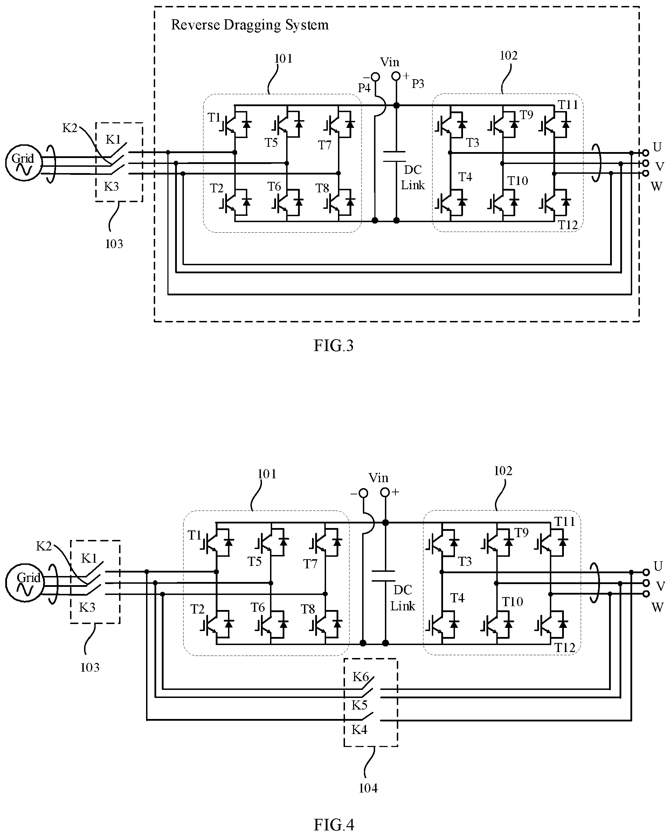

On the basis of Embodiment 1, this embodiment provides a reversing system. Referring to FIG.3, in the converter of the reversing system, both the first full-bridge and the second full-bridge are three-phase full-bridges. In other optional implementations, the first full-bridge and the second full-bridge both are single-phase full-bridges, multi-phase full bridges, multi-level full-bridges, or the like.

The converter of the reversing system is disconnected from the external AC power supply through a second switching module 103. The second switching module 103 includes a first switch K1, a second switch K2, and a third switch K3.

The first full-bridge 101 includes a first-phase AC terminal, a second-phase AC terminal, and a third-phase AC terminal; the second full-bridge 102 includes a first-phase AC terminal, a second-phase AC terminal, and a third-phase AC terminal. The first-phase AC terminal, the second-phase AC terminal, and the third-phase AC terminal of the first full-bridge are respectively electrically connected to the first-phase AC terminal, the second-phase AC terminal, and the third-phase AC terminal of the second full-bridge.

The first full-bridge 101 includes a first bridge arm, a third bridge arm and a fourth bridge arm; the second full-bridge 102 includes a second bridge arm, a fifth bridge arm and a sixth bridge arm; the second bridge arm, the third bridge arm, the fourth bridge arm, the fifth bridge arm, and the sixth bridge arm are all connected in parallel with the first bridge arm.

Optionally, the converter is a two-way converter, where the first bridge arm includes a first two-way switching unit T1 and a second two-way switching unit T2, and the first two-way switching unit T1 and the second two-way switching unit T2 are connected in series in a same direction; The second bridge arm includes a third two-way switching unit T3 and a fourth two-way switching unit T4, and the third two-way switching unit T3 and the fourth two-way switching unit T4 are connected in series in a same direction. The third bridge arm includes a fifth two-way switching unit T5 and a sixth two-way switching unit T6, the fifth two-way switching unit T5 and the sixth two-way switching unit T6 are connected in series in a same direction. The fourth bridge arm includes a seventh two-way switching unit T7 and an eighth two-way switching unit T8, the seventh two-way switching unit T7 and the eighth two-way switching unit T8 are connected in series in a same direction. The fifth bridge arm includes a ninth two-way switching unit T9 and a tenth two-way switching unit T10, the ninth two-way switching unit T9 and the tenth two-way switching unit T10 are connected in series in a same direction. The sixth bridge arm includes an eleventh two-way switching unit T11 and a twelfth two-way switching unit T12, and the eleventh two-way switching unit T11 and the twelfth two-way switching unit T12 are connected in series in a same direction.

In an optional implementation, the first two-way switching unit T1, the second two-way switching unit T2, the third two-way switching unit T3, the fourth two-way switching unit T4, the fifth two-way switching unit T5, the sixth two-way switching unit T6, the seventh two-way switching unit T7, the eighth two-way switching unit T8, the ninth two-way switching unit T9, the tenth two-way switching unit T10, the eleventh two-way switching unit T11, and the twelfth two-way switching unit T12 are all IGBTs. In other optional implementations, the two-way switching unit includes SiC (Silicon Carbide), MOSFET (Metal-Oxide-Semiconductor Field-Effect Transistor).

In an optional implementation, a rated current of the two-way switching unit included in the first full-bridge is different from a rated current of the two-way switching unit included in the second full-bridge. At this time, load-carrying capacity of the first full-bridge is different from that of the second full-bridge.

The reversing system further includes external wiring terminals P3 and P4, and the DC Link is electrically connected to the external DC power supply Vin through the external wiring terminals P3 and P4. The external wiring terminals P3 and P4 may be terminals provided with the converter, or may be terminals separately installed on the DC Link of the converter.

### Embodiment 3

On the basis of Embodiment 2, this embodiment provides a reversing system. Referring to FIG.4, the reversing system further includes a first switching module 104. The AC port of the first full-bridge is electrically connected to the AC port of the second full-bridge through the first switching module.

In an optional implementation, the reversing system further includes a second switching module 103; the AC port of the first full-bridge is disconnected from an external AC power supply through the second switching module 103.

The second switching module 103 includes a first switch K1, a second switch K2, and a third switch K3. The first switching module 104 includes a fourth switch K4, a fifth switch K5, and a sixth switch K6.

Output terminals of the reversing system includes a first-phase output terminal U, a second-phase output terminal V, and a third-phase output terminal W. The external AC power supply includes a first-phase terminal, a second-phase terminal and a third-phase terminal. A first connecting terminal is disconnected from the first-phase terminal through the first switch K1, the second connecting terminal is disconnected from the second-phase terminal through the second switch K2, the third connecting terminal is disconnected from the third-phase terminal through the third switch K3. The first connecting terminal is connected to the first-phase output terminal U through the fourth switch K4, the second connecting terminal is connected to the second-phase output terminal V through the fifth switch K5, and the third connecting terminal is connected to the third-phase output terminal W through the sixth switch K6. A fourth connecting terminal is connected to the first-phase output terminal U, a fifth connecting terminal is connected to the second-phase output terminal V, and a sixth connecting terminal is connected to the third-phase output terminal W. Where the first connecting terminal is a connecting terminal of the first two-way switching unit T1 and the second two-way switching unit T2, the second connecting terminal is a connecting terminal of the fifth two-way switching unit T5 and the sixth two-way switching unit T6, the third connecting terminal is a connecting terminal of the seventh two-way switching unit T7 and the eighth two-way switching unit T8, and the fourth connecting terminal is a connecting terminal of the third two-way switching unit T3 and the fourth two-way switching unit T4, the fifth connecting terminal is a connecting terminal of the ninth two-way switching unit T9 and the tenth two-way switching unit T10, and the sixth connecting terminal is a connecting terminal of the eleventh two-way switching unit T11 and the twelfth two-way switching unit T12. That is, the first connecting terminal is the first-phase AC terminal of the first full-bridge, the second connecting terminal is the second-phase AC terminal of the first full-bridge, and the third connecting terminal is the third-phase AC terminal of the first full-bridge. The fourth connecting terminal is the first-phase AC terminal of the second full-bridge, the fifth connecting terminal is the second-phase AC terminal of the second full-bridge, and the sixth connecting terminal is the third-phase AC terminal of the second full-bridge.

In an optional implementation, the converter of the reversing system is a two-way converter. When the second switching module 103 is closed, the first switching module 104 is open. In this way, the first full-bridge 101 and the second full-bridge 102 are mainly to realize rectification and inversion, and a voltage of the DC Link is stabilized through a capacitor. Taking the first full-bridge 101 connected to a Grid as an example, when a motor connected to the second full-bridge 102 functions as an electric driver, the first full-bridge 101 is mainly to realize controllable rectification. The capacitor on the DC Link is charged to stabilize the voltage at an expected value. The second full-bridge 102 is mainly to realize inversion for converting electrical energy into a form of electrical energy required by the motor. Conversely, if the motor connected to the second full-bridge 102 functions as a power generating device, the second full-bridge 102 can be used for controllable rectification and the first full-bridge 101 can be used for inversion so to transfer electrical energy from the power generating device back to the Grid. Therefore, when the second switching module 103 is closed and the first switching module 104 is open, the converter can realize two-way flows of electrical energy for an AC power generation system and an AC motor speed regulation system respectively.

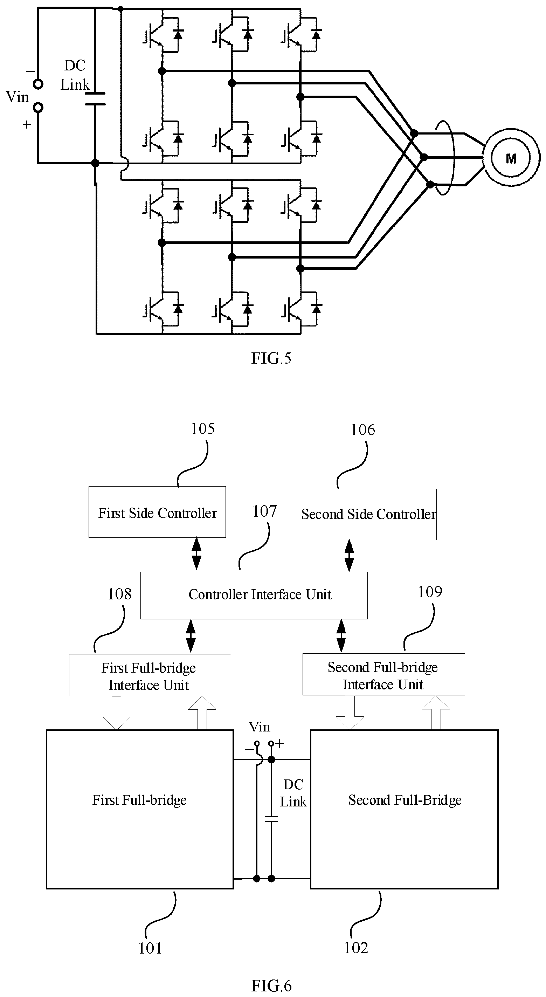

In a reversing system provided by an embodiment, the second switching module 103 is open, and the first switching module 104 is closed. At this time, the first full-bridge 101 is disconnected from the external AC power supply, the first-phase AC terminal, the second-phase AC terminal, and the third-phase AC terminal of the first full-bridge 101 are respectively short-circuited with the first-phase AC terminal, the second-phase AC terminal, and the third-phase AC terminal of the second full-bridge 102, so as to realize "folded-in-half" parallel connection. An equivalent circuit of being folded-in-half is shown in FIG.5. The first-phase output terminal U, the second-phase output terminal V and the third-phase output terminal W are connected to a three-phase motor M. After the external DC power supply Vin is connected, stable input voltage and energy are provided. An output current of the reversing system can be doubled compared with before the converter being folded-in-half, and output torque capacity is also expanded accordingly, so the load-carrying capacity is also enhanced. It should be noted that this embodiment takes a three-phase converter and a three-phase motor as examples for illustration, but the present disclosure does not limit the number of phases of the converter and the motor.

In another optional implementation, the external AC power supply can be rectified as an external DC power supply provided to the reversing system. For example, the Grid or other AC power supply equipment may be electrically connected to the DC Link of the reversing system through a rectifier.

### Embodiment 4

On the basis of Embodiment 1, this embodiment provides a reversing system. Referring to FIG.6, the reversing system further includes a first side controller 105, a second side controller 106, a controller interface unit 107, a first full-bridge interface unit 108, and a second full-bridge interface unit 109.

The controller interface unit 107 is respectively electrically connected to the first side controller 105, the second side controller 106, the first full-bridge interface unit 108, and the second full-bridge interface unit 109. The first full-bridge interface unit 108 is electrically connected to the first full-bridge 101, and the second full-bridge interface unit 109 is electrically connected to the second full-bridge 102.

In a specific implementation, the first side controller 105 and the second side controller 106 may be implemented by a CPU. The controller interface unit 107 is implemented by a controller interface chip. The first full-bridge interface unit 108 and the second full-bridge interface unit 109 are implemented by a full-bridge interface chip.

When a second switching module 103 is closed, the first side controller 105 controls the first full-bridge 101 through the first full-bridge interface unit 108, and the second side controller 106 controls the second full-bridge 102 through the second full-bridge interface unit 109. When the second switching module 103 is open, the second side controller 106 controls the first full-bridge 101 through the first full-bridge interface unit 108, and controls the second full-bridge 102 through the second full-bridge interface unit 109.

When the converter functions as an inverter of the reversing system, the output terminal of the converter is connected to the motor, the second switching module 103 is open, and the second side controller 106 controls the first full-bridge 101 through the first full-bridge interface unit 108, and controls the second full-bridge 102 through the second full-bridge interface unit 109. That is, all signals of the first full-bridge 101 are transferred to the second side controller 106 (i.e., motor-side control CPU) by the controller interface unit 107. Thus, the motor-side control CPU can simultaneously drive the first full-bridge 101 and the second full-bridge 102, with same switching frequency and synchronous switching timing. Pulse sequences are generated to drive each two-way switching unit (such as IGBT) by a Pulse Width Modulation technology to generate corresponding AC output.

### Embodiment 5

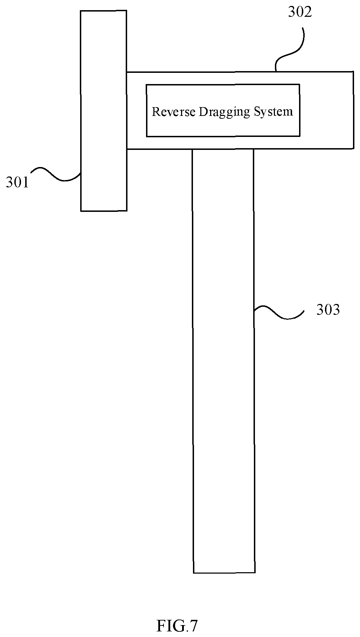

This embodiment provides a wind turbine. Referring to FIG.7, the wind turbine includes a tower 303, an impeller 301, a nacelle 302 and the reversing system of any one of Embodiments 1-4. The converter of the reversing system functions as a converter of the wind turbine, and is arranged in the nacelle of the wind turbine.

In a specific implementation, when the converter of the wind turbine in this embodiment is applied to a rotating control, that is, operating with a low speed and a super torque. In this way, the reversing system provided by the present disclosure can be formed with the converter of the wind turbine by causing the converter in a folded-in-half reversing structure, so as to improve load-carrying capacity. Further, due to operating with a low speed and a high torque, a Grid can supply power to the reversing system through a small-capacity rectifier, which greatly reduces an equipment cost.

However, in related arts, in order to improve the load-carrying capacity, additional converter equipment is often needed for the rotating control. The converter equipment has large volume and mass, which makes it inconvenient to install. In particular, when the converter of the wind turbine is arranged inside the nacelle of the wind turbine, since the tower is very high, installing additional converter equipment needs a hoisting operation, which is very inconvenient to operate. On the other hand, for the wind turbine of this embodiment, the load-carrying capacity can be easily increased through the reversing system of the present disclosure, and an extra cost is reduced.

### Embodiment 6

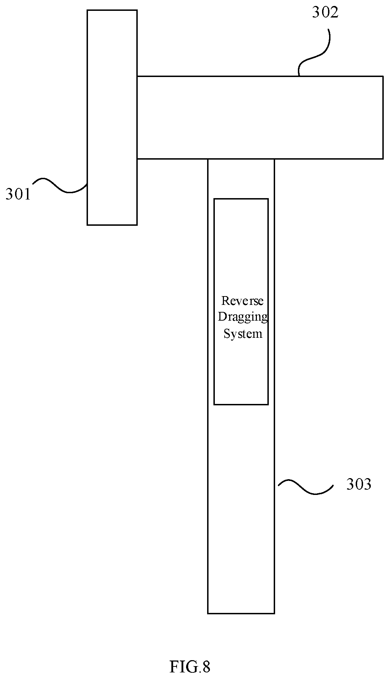

This embodiment provides a wind turbine. Referring to FIG.8, the wind turbine includes a tower 303, an impeller 301, a nacelle 302 and the reversing system of any one of Embodiments 1-4.

In an optional implementation, the converter functions as a converter of the wind turbine, and is arranged in the tower of the wind turbine, which is convenient for installation, operation and maintenance.

Although specific embodiments of the present disclosure are described above, those skilled in the art should understand that these are only examples, and various changes or modifications may be made to these embodiments without departing from the principle and essence of the present disclosure. Therefore, the scope of protection of the present application is defined by the appended claims.

## Claims

1. A wind turbine comprising a reversing system, wherein the reversing system comprises a converter configured to provide two-way flows of energy;
**characterized in that:**
the converter comprises a first full-bridge (101), a second full-bridge (102) and a DC Link;
the first full-bridge (101) and the second full-bridge (102) are electrically connected back-to-back through the DC Link;
the DC Link is configured to be connected to an external DC power supply;
an AC port of the first full-bridge (101) is configured to be connected to either an external AC power supply, like an AC power Grid, or an AC port of the second full-bridge;
the AC port of the second full-bridge (102) is connected to an output terminal (P2) of the reversing system and is connectable to a motor operable as both a motor and a power generating device (M);
when the converter is reversing, the AC port of the first full-bridge (101) is electrically connected to an AC port of the second full-bridge (102);
the DC Link is electrically connected to the external DC power supply; and
the AC port of the first full-bridge (101) and the AC port of the second full-bridge (102) are configured to provide flows of energy to the output terminal (P2) of the reversing system, wherein the motor is operable as a motor.

2. The wind turbine of claim 1, wherein the reversing system further comprises one or more external wiring terminals (P3 ; P4), and the DC Link is electrically connected to the external DC power supply through the one or more external wiring terminals (P3 ; P4).

3. The wind turbine of claim 1 or 2, wherein the converter further comprises a capacitor, and the capacitor is connected in parallel with the first full-bridge (101).

4. The wind turbine of any one of claims 1 to 3, wherein the reversing system further comprises a first switching module (104);
the AC port of the first full-bridge (101) is electrically connected to the AC port of the second full-bridge (102) through the first switching module (104).

5. The wind turbine of claim 4, wherein the reversing system further comprises a second switching module (103);
the AC port of the first full-bridge (101) is disconnected from the external AC power supply (2) through the second switching module (103).

6. The wind turbine of claim 5, wherein the first full-bridge (101) comprises a plurality of first two-way switching units (T1), the second full-bridge (102) comprises a plurality of second two-way switching units (T2), and rated currents of the first two-way switching units (T1) and the second two-way switching units (T2) are different.

7. The wind turbine of claim 5 or 6, wherein the first switching module (104) comprises a first switch (K1), a second switch (K2) and a third switch (K3); the second switching module (103) comprises a fourth switch (K4), a fifth switch (K5) and a sixth switch (K6);
the first full-bridge (101) comprises a first-phase AC terminal, a second-phase AC terminal and a third-phase AC terminal;
the second full-bridge (102) comprises a first-phase AC terminal, a second-phase AC terminal and a third-phase AC terminal;
the external AC power supply (2) comprises a first-phase terminal, a second-phase terminal and a third-phase terminal;
the first-phase AC terminal of the first full-bridge (101) is disconnected from the first-phase terminal through the first switch (K1), and the second-phase AC terminal of the first full-bridge (101) is disconnected from the second-phase terminal through the second switch (K2), and the third-phase AC terminal of the first full-bridge (101) is disconnected from the third-phase terminal through the third switch (K3); and
the first-phase AC terminal of the first full-bridge (101) is electrically connected to the first-phase AC terminal of the second full-bridge (102) through the fourth switch (K4), and the second-phase AC terminal of the first full-bridge (101) is electrically connected to the second-phase AC terminal of the second full-bridge (102) through the fifth switch (K5), and the third-phase AC terminal of the first full-bridge (101) is electrically connected to the third-phase AC terminal of the second full-bridge (102) through the sixth switch (K6).

8. The wind turbine of any one of claims 1 to 7, wherein the converter is a two-way converter.

9. The wind turbine of any one of claims 5 to 8, wherein the reversing system further comprises a first side controller (105), a second side controller (106), a controller interface unit (107), a first full-bridge interface unit (108), and a second full-bridge interface unit (109); the controller interface unit (107) is electrically connected to the first side controller (105), the second side controller (106), the first full-bridge interface unit (108), and the second full-bridge interface unit (109), respectively;
the first full-bridge interface unit (108) is electrically connected to the first full-bridge (101), and the second full-bridge interface unit (109) is electrically connected to the second full-bridge (102);
when the second switching module (103) is open, the second side controller (106) controls the first full-bridge (101) through the first full-bridge interface unit (108) and controls the second full-bridge (102) through the second full-bridge interface unit (109).

10. The wind turbine of any one of claims 1 to 9, wherein the external AC power supply (2) comprises a power grid.

11. The wind turbine of any one of claims 1 to 3, wherein when the converter of the reversing system is for transferring energy between the external AC power supply (2) and a motor, the first full-bridge (101) and the second full-bridge (102) are electrically connected back-to-back through the DC Link;
the AC port of the first full-bridge (101) is electrically connected to the external AC power supply (2);
the AC port of the first full-bridge (101) is disconnected from the AC port of the second full-bridge (102);
the AC port of the second full-bridge (102) is electrically connected to the motor.

12. The wind turbine of claim 1, wherein the converter of the reversing system functions as a converter of the wind turbine and is arranged in a nacelle (302) of the wind turbine.

13. The wind turbine of claim 1 or 12, wherein the converter of the reversing system functions as a converter of the wind turbine and is arranged in a tower (303) of the wind turbine.

## Patentansprüche

1. Eine Windkraftanlage, umfassend ein Umkehrsystem, wobei das Umkehrsystem einen Umrichter umfasst, der dazu konfiguriert ist, bidirektionale Energieflüsse bereitzustellen;
**gekennzeichnet durch**:
der Umrichter umfasst eine erste Vollbrücke (101), eine zweite Vollbrücke (102) und einen Gleichstromzwischenkreis DC-Link;
die erste Vollbrücke (101) und die zweite Vollbrücke (102) sind elektrisch rückseitig durch den Gleichstromzwischenkreis verbunden;
der Gleichstromzwischenkreis ist dazu konfiguriert, mit einer externen Gleichstromversorgung verbunden zu werden;
ein Wechselstromanschluss der ersten Vollbrücke (101) ist dazu konfiguriert, entweder mit einer externen Wechselstromversorgung, wie einem Wechselstromnetz, oder mit einem Wechselstromanschluss der zweiten Vollbrücke verbunden zu werden;
der Wechselstromanschluss der zweiten Vollbrücke (102) ist mit einem Ausgangsanschluss (P2) des Umkehrsystems verbunden und ist mit einem Motor verbindbar, der sowohl als Motor als auch als Energieerzeugungsvorrichtung (M) betrieben werden kann;
wenn der Umrichter umkehrt, ist der Wechselstromanschluss der ersten Vollbrücke (101) elektrisch mit einem Wechselstromanschluss der zweiten Vollbrücke (102) verbunden;
der Gleichstromzwischenkreis ist elektrisch mit der externen Gleichstromversorgung verbunden; und
der Wechselstromanschluss der ersten Vollbrücke (101) und der Wechselstromanschluss der zweiten Vollbrücke (102) sind dazu konfiguriert, Energieflüsse zum Ausgangsanschluss (P2) des Umkehrsystems bereitzustellen, wobei der Motor als Motor betrieben wird.

2. Die Windkraftanlage nach Anspruch 1, wobei das Umkehrsystem ferner eine oder mehrere externe Anschlussklemmen (P3; P4) umfasst, und der Gleichstromzwischenkreis elektrisch über die einen oder mehrere externen Anschlussklemmen mit der externen Gleichstromversorgung verbunden ist.

3. Die Windkraftanlage nach Anspruch 1 oder 2, wobei der Umrichter ferner einen Kondensator umfasst, der parallel zur ersten Vollbrücke (101) geschaltet ist.

4. Die Windkraftanlage nach einem der Ansprüche 1 bis 3, wobei das Umkehrsystem ferner ein erstes Schaltmodul (104) umfasst,
wobei der Wechselstromanschluss der ersten Vollbrücke (101) elektrisch über das erste Schaltmodul (104) mit dem Wechselstromanschluss der zweiten Vollbrücke (102) verbunden ist.

5. Die Windkraftanlage nach Anspruch 4, wobei das Umkehrsystem ferner ein zweites Schaltmodul (103) umfasst,
wobei der Wechselstromanschluss der ersten Vollbrücke (101) über das zweite Schaltmodul (103) von der externen Wechselstromversorgung (2) getrennt ist.

6. Die Windkraftanlage nach Anspruch 5, wobei die erste Vollbrücke (101) mehrere erste bidirektionale Schaltelemente (T1) umfasst, die zweite Vollbrücke (102) mehrere zweite bidirektionale Schaltelemente (T2) umfasst, und die Nennströme der T1- und T2-Schaltelemente unterschiedlich sind.

7. Die Windkraftanlage nach Anspruch 5 oder 6, wobei:
das erste Schaltmodul (104) einen ersten Schalter (K1), einen zweiten Schalter (K2) und einen dritten Schalter (K3) umfasst;
das zweite Schaltmodul (103) einen vierten Schalter (K4), einen fünften Schalter (K5) und einen sechsten Schalter (K6) umfasst;
die erste Vollbrücke (101) einen Wechselstromanschluss der ersten Phase, der zweiten Phase und der dritten Phase umfasst;
die zweite Vollbrücke (102) einen Wechselstromanschluss der ersten Phase, der zweiten Phase und der dritten Phase umfasst;
die externe Wechselstromversorgung (2) einen ersten Phasenanschluss, einen zweiten Phasenanschluss und einen dritten Phasenanschluss umfasst;
der Wechselstromanschluss der ersten Phase der ersten Vollbrücke (101) über den ersten Schalter (K1) vom ersten Phasenanschluss getrennt ist, der Anschluss der zweiten Phase über den zweiten Schalter (K2) vom zweiten Phasenanschluss getrennt ist und der Anschluss der dritten Phase über den dritten Schalter (K3) vom dritten Phasenanschluss getrennt ist;
und der Wechselstromanschluss der ersten Phase der ersten Vollbrücke (101) über den vierten Schalter (K4) mit dem Anschluss der ersten Phase der zweiten Vollbrücke (102) elektrisch verbunden ist, der Anschluss der zweiten Phase über den fünften Schalter (K5) mit dem Anschluss der zweiten Phase verbunden ist, und der Anschluss der dritten Phase über den sechsten Schalter (K6) mit dem Anschluss der dritten Phase der zweiten Vollbrücke (102) verbunden ist.

8. Die Windkraftanlage nach einem der Ansprüche 1 bis 7, wobei der Umrichter ein bidirektionaler Umrichter ist.

9. Die Windkraftanlage nach einem der Ansprüche 5 bis 8, wobei das Umkehrsystem ferner einen ersten Seitenregler (105), einen zweiten Seitenregler (106), eine Schnittstelleneinheit für den Regler (107), eine erste Schnittstelleneinheit für die Vollbrücke (108) und eine zweite Schnittstelleneinheit für die Vollbrücke (109) umfasst;
die Schnittstelleneinheit für den Regler (107) ist jeweils elektrisch mit dem ersten Seitenregler (105), dem zweiten Seitenregler (106), der ersten Schnittstelleneinheit (108) und der zweiten Schnittstelleneinheit (109) verbunden;
die erste Schnittstelleneinheit (108) ist elektrisch mit der ersten Vollbrücke (101) verbunden, und die zweite Schnittstelleneinheit (109) ist elektrisch mit der zweiten Vollbrücke (102) verbunden;
wenn das zweite Schaltmodul (103) geöffnet ist, steuert der zweite Seitenregler (106) die erste Vollbrücke (101) über die erste Schnittstelleneinheit (108) und steuert die zweite Vollbrücke (102) über die zweite Schnittstelleneinheit (109).

10. Die Windkraftanlage nach einem der Ansprüche 1 bis 9, wobei die externe Wechselstromversorgung (2) ein Stromnetz umfasst.

11. Die Windkraftanlage nach einem der Ansprüche 1 bis 3, wobei der Umrichter des Umkehrsystems zur Energieübertragung zwischen der externen Wechselstromversorgung (2) und einem Motor dient:
die erste Vollbrücke (101) und die zweite Vollbrücke (102) sind elektrisch rückseitig über den Gleichstromzwischenkreis verbunden;
der Wechselstromanschluss der ersten Vollbrücke (101) ist elektrisch mit der externen Wechselstromversorgung (2) verbunden;
der Wechselstromanschluss der ersten Vollbrücke (101) ist vom Wechselstromanschluss der zweiten Vollbrücke (102) getrennt;
und der Wechselstromanschluss der zweiten Vollbrücke (102) ist elektrisch mit dem Motor verbunden.

12. Die Windkraftanlage nach Anspruch 1, wobei der Umrichter des Umkehrsystems als Umrichter der Windkraftanlage fungiert und in einer Gondel (302) der Windkraftanlage angeordnet ist.

13. Die Windkraftanlage nach Anspruch 1 oder 12, wobei der Umrichter des Umkehrsystems als Umrichter der Windkraftanlage fungiert und in einem Turm (303) der Windkraftanlage angeordnet ist.

## Revendications

1. Une éolienne comprenant un système d'inversion, ledit système d'inversion comprenant un convertisseur configuré pour fournir des flux d'énergie bidirectionnels ;
**caractérisé en ce que :**
le convertisseur comprend un premier pont complet (101), un deuxième pont complet (102) et un lien c.c. ;
le premier pont complet (101) et le deuxième pont complet (102) sont connectés dos à dos par l'intermédiaire du lien c.c. ;
le lien c.c. est configuré pour être connecté à une alimentation externe en courant continu ;
un port c.a. du premier pont complet (101) est configuré pour être connecté soit à une alimentation externe en courant alternatif, comme un réseau électrique c.a., soit à un port c.a. du deuxième pont complet ;
le port c.a. du deuxième pont complet (102) est connecté à une borne de sortie (P2) du système d'inversion et peut être connecté à un moteur fonctionnant à la fois comme moteur et comme générateur d'énergie (M) ;
lorsque le convertisseur est en mode inversion, le port c.a. du premier pont complet (101) est connecté électriquement à un port c.a. du deuxième pont complet (102) ;
le lien c.c. est connecté électriquement à l'alimentation externe en courant continu ;
et les ports c.a. des premier et deuxième ponts complets (101, 102) sont configurés pour fournir des flux d'énergie vers la borne de sortie (P2) du système d'inversion, le moteur fonctionnant alors comme un moteur.

2. L'éolienne selon la revendication 1, dans laquelle le système d'inversion comprend en outre une ou plusieurs bornes de câblage externe (P3 ; P4), et le lien c.c. est connecté électriquement à l'alimentation externe en courant continu via ladite ou lesdites bornes de câblage externe (P3 ; P4).

3. L'éolienne selon la revendication 1 ou 2, dans laquelle le convertisseur comprend en outre un condensateur connecté en parallèle avec le premier pont complet (101).

4. L'éolienne selon l'une quelconque des revendications 1 à 3, dans laquelle le système d'inversion comprend en outre un premier module de commutation (104), le port c.a. du premier pont complet (101) étant connecté électriquement au port c.a. du deuxième pont complet (102) via le premier module de commutation (104).

5. L'éolienne selon la revendication 4, dans laquelle le système d'inversion comprend en outre un deuxième module de commutation (103), le port c.a. du premier pont complet (101) étant déconnecté de l'alimentation externe en courant alternatif (2) via le deuxième module de commutation (103).

6. L'éolienne selon la revendication 5, dans laquelle le premier pont complet (101) comprend une pluralité de premières unités de commutation bidirectionnelle (T1), le deuxième pont complet (102) comprend une pluralité de deuxièmes unités de commutation bidirectionnelle (T2), et les courants nominaux des premières unités de commutation bidirectionnelle (T1) et deuxièmes unités de commutation bidirectionnelle (T2) sont différents.

7. L'éolienne selon la revendication 5 ou 6, dans laquelle :le premier module de commutation (104) comprend un premier interrupteur (K1), un deuxième interrupteur (K2) et un troisième interrupteur (K3) ; le deuxième module de commutation (103) comprend un quatrième interrupteur (K4), un cinquième interrupteur (K5) et un sixième interrupteur (K6) ;
le premier pont complet (101) comprend une borne c.a. de première phase, une borne c.a. de deuxième phase et une borne c.a. de troisième phase ;
le deuxième pont complet (102) comprend une borne c.a. de première phase, une borne c.a. de deuxième phase et une borne c.a. de troisième phase ;
l'alimentation externe en courant alternatif (2) comprend une borne de première phase, une borne de deuxième phase et une borne de troisième phase ;
la borne c.a. de première phase du premier pont complet (101) est déconnectée de la borne de première phase par le premier interrupteur (K1), la borne c.a. de deuxième phase du premier pont complet (101) est déconnectée de la borne de deuxième phase par le deuxième interrupteur (K2), et la borne c.a. de troisième phase du premier pont complet (101) est déconnectée de la borne de troisième phase par le troisième interrupteur (K3) ; et
la borne c.a. de première phase du premier pont complet (101) est connectée électriquement à la borne c.a. de première phase du deuxième pont complet (102) par le quatrième interrupteur (K4), et la borne c.a. de deuxième phase du premier pont complet (101) est connectée électriquement à la borne c.a. de deuxième phase du deuxième pont complet (102) par le cinquième interrupteur (K5), et la borne c.a. de troisième phase du premier pont complet (101) est connectée électriquement à la borne c.a. de troisième phase du deuxième pont complet (102) par le sixième interrupteur (K6).

8. L'éolienne selon l'une quelconque des revendications 1 à 7, dans laquelle le convertisseur est un convertisseur bidirectionnel.

9. L'éolienne selon l'une quelconque des revendications 5 à 8, dans laquelle le système d'inversion comprend en outre un premier contrôleur côté (105), un deuxième contrôleur côté (106), une unité d'interface de contrôle (107), une unité d'interface de premier pont (108), et une unité d'interface de deuxième pont (109) ;
l'unité d'interface de contrôle (107) est connectée électriquement au premier contrôleur côté (105), au deuxième contrôleur côté (106), à l'unité d'interface de premier pont (108), et à l'unité d'interface de deuxième pont (109), respectivement;
l'unité d'interface de premier pont (108) est connectée électriquement au premier pont complet (101), et l'unité d'interface de deuxième pont (109) est connectée électriquement au deuxième pont complet (102) ;
lorsque le deuxième module de commutation (103) est ouvert, le deuxième contrôleur côté (106) commande le premier pont complet (101) via l'unité d'interface de premier pont (108) et commande le deuxième pont complet (102) via l'unité d'interface de deuxième pont (109).

10. L'éolienne selon l'une quelconque des revendications 1 à 9, dans laquelle l'alimentation externe en courant alternatif (2) comprend un réseau électrique.

11. L'éolienne selon l'une quelconque des revendications 1 à 3, dans laquelle, lorsque le convertisseur du système d'inversion est configuré pour transférer de l'énergie entre l'alimentation c.a. externe (2) et un moteur :
le premier pont complet (101) et le deuxième pont complet (102) sont connectés électriquement dos à dos par le lien c.c. ;
le port c.a. du premier pont complet (101) est connecté électriquement à l'alimentation c.a. externe (2) ;
le port c.a. du premier pont complet (101) est déconnecté du port c.a. du deuxième pont complet (102) ;
le port c.a. du deuxième pont complet (102) est connecté électriquement au moteur.

12. L'éolienne selon la revendication 1, dans laquelle le convertisseur du système d'inversion fonctionne comme convertisseur de l'éolienne et est disposé dans une nacelle (302) de l'éolienne.

13. L'éolienne selon la revendication 1 ou 12, dans laquelle le convertisseur du système d'inversion fonctionne comme convertisseur de l'éolienne et est disposé dans une tour (303) de l'éolienne.
